# EUROPEAN PATENT APPLICATION

(11) **EP 4 807 353 A2**
(43) Date of publication of application: **16.09.2026**
(21) Application number: 26164022.1
(22) Date of filing: 11.03.2026
(51) Int. Cl.: G01N 23/10, G01N 23/04, G01V 5/22, G06T 7/00

(54) **X-RAY INSPECTION APPARATUS**

(30) Priority: 13.03.2025 JP 2025040649
(71) Applicant: Ishida Co., Ltd., Kyoto 606-8392 (JP)
(72) Inventor: IKEDA, Shinya, Ritto-shi, Shiga 520-3026 (JP); YURUGI, Futoshi, Ritto-shi, Shiga 520-3026 (JP); SUGIMOTO, Kazuyuki, Ritto-shi, Shiga 520-3026 (JP)
(74) Representative: Global IP Europe Patentanwaltskanzlei

(57) **Abstract**

Providing an X-ray inspection apparatus with which it is possible to present an image in which the position of an undesirable part in a product can easily be recognized by a worker. An X-ray inspection apparatus includes a conveyor to convey a product, an X-ray irradiator to irradiate X-rays on the product being conveyed by the conveyor, a line sensor to detect the X-rays irradiate on the product, an image generation unit to generate an X-ray transmission image on the basis of the X-rays detected by the line sensor, an assessment unit to assess whether an undesirable part is present in the product by using a difference image that is obtained from the X-ray transmission image, and a display unit to display an image of the product. In cases where the assessment unit assesses that an undesirable part is included in the product as a result of having applied a first criterion to perform assessment, the display unit displays a result of a detection in which the assessment unit applies a second criterion that yields a higher sensitivity in detection of undesirable parts than the first criterion to detect the undesirable part, in an undesirable part region A that is assessed to include the undesirable part upon application of the first criterion within the image of the product.

## Description

### TECHNICAL FIELD

The present invention relates to an X-ray inspection apparatus.

### BACKGROUND ART

Patent Literature 1 (Japanese Laid-open Patent Publication No. 2019-107605) discloses an X-ray inspection apparatus in which an X-ray transmission image is displayed on a display unit. The X-ray transmission image is used, for example, by a worker who removes an undesirable part from a product to recognize the position of the undesirable part in the product.

### SUMMARY OF THE INVENTION

### <Problem to be Solved by Invention>

There are many cases where a worker can recognize the position of an undesirable part from an X-ray transmission image. However, depending on the cause of the undesirable part, the size of the undesirable part, or the like, it can be difficult to recognize the position of the undesirable part from the X-ray transmission image. For example, in cases where the X-ray transmission image is used in work to remove extraneous matter present at the position of the undesirable part, it can be difficult for a worker to accurately recognize the position of the undesirable part from the X-ray transmission image if the X-ray transmissivity of the extraneous matter is comparatively similar to that of a product or if the extraneous matter is of small dimensions.

If a computer can accurately identify the position of the undesirable part automatically on the basis of the X-ray transmission image, the computer may display the undesirable part in an emphasized manner through image processing, as disclosed in Patent Literature 1 (Japanese Laid-open Patent Publication No. 2019-107605). However, in cases where it is difficult for a worker to clearly recognize the undesirable part from an X-ray transmission image, there is a possibility that even a computer will not be able to precisely identify the position of the undesirable part.

It is an object of the present invention to provide an X-ray inspection apparatus with which it is possible to present an image in which the position of an undesirable part in a product can easily be recognized by a worker.

### <Means for Solving Problem>

An X-ray inspection apparatus according to a first aspect of the present invention comprises a conveying unit, an X-ray source, an X-ray detector, an image generation unit, an assessment unit, and a display unit. The conveying unit is configured to convey a product. The X-ray source is configured to emit X-rays on the product conveyed by the conveying unit. The X-ray detector is configured to detect the X-rays irradiated on the product. The image generation unit is configured to generate an X-ray transmission image based on the X-rays detected by the X-ray detector. The assessment unit is configured to assess whether an undesirable part is present in the product by using the X-ray transmission image or an inspection target image that is obtained from the X-ray transmission image. The display unit is configured to display an image of the product. In a case where the assessment unit assesses that an undesirable part is included in an undesirable part region in the image of the product based on assessment that applies a first criterion, the display unit is configured to display a result of a detection in which the assessment unit applies a second criterion in the undesirable part region in the image of the product, the second criterion having a higher sensitivity in detection of an undesirable part than the first criterion.

In the X-ray inspection apparatus according to the first aspect, it is easy to ascertain the position of the undesirable part from the image displayed on the display unit even in a case where the luminance of pixels showing the product and the luminance of pixels showing the undesirable part are comparatively similar and in a case where the undesirable part is of small size.

An X-ray inspection apparatus according to a second aspect of the present invention is the X-ray inspection apparatus according to the first aspect, wherein the display unit is configured to display, as a result of the undesirable part being detected upon application of the second criterion, a portion where the undesirable part is detected to be present upon application of the second criterion such that the portion is surrounded by a frame or such that the portion is displayed in a hue, brightness, or saturation that enables the portion to be distinguished from portions other than the portion where the undesirable part is detected to be present upon application of the second criterion.

In the X-ray inspection apparatus according to the second aspect, because the portion where the undesirable part is detected to be present upon application of the second criterion is displayed using a frame or a color, it is easy to ascertain the position of the undesirable part from the image displayed on the display unit.

An X-ray inspection apparatus according to a third aspect of the present invention is the X-ray inspection apparatus according to the first or second aspect, wherein the first criterion is set so that the assessment unit does not assess a reference luminance value of pixels showing the product in the inspection target image to be an undesirable part.

In the X-ray inspection apparatus according to the third aspect, it is possible to reduce the possibility that the product itself will be determined to be an undesirable part when the first criterion is applied to assess whether an undesirable part is present.

An X-ray inspection apparatus according to a fourth aspect of the present invention is the X-ray inspection apparatus according to any one of the first to third aspects, wherein the second criterion is set so that the assessment unit assesses a reference luminance value of pixels showing the product in the inspection target image to be an undesirable part.

In the X-ray inspection apparatus according to the fourth aspect, it is easy to ascertain the position of the undesirable part from the image displayed on the display unit even in a case where the luminance of pixels showing the product and the luminance of pixels showing the undesirable part are comparatively similar and in a case where the undesirable part is of small size.

An X-ray inspection apparatus according to a fifth aspect of the present invention is the X-ray inspection apparatus according to any one of the first to fourth aspects, wherein the assessment unit is configured to perform, using the first criterion, a first process to assess whether an undesirable part is present by using a machine learning model and a second process to assess whether an undesirable part is present based on a predetermined rule. In a case where the assessment unit assesses that an undesirable part is included in the product in the first process and assesses that undesirable part is not included in the product in the second process, the display unit is configured to display the result of detection in which the assessment unit applies the second criterion in the undesirable part region in the image of the product.

There are cases where an undesirable part that is difficult to detect on the basis of a rule can be detected in the assessment of presence of an undesirable part using the machine learning model. However, in the case of an undesirable part that can be detected by the machine learning model but is difficult to detect on the basis of a rule, it is highly likely that it will be difficult to ascertain the position of the undesirable part from the image of the product even if the X-ray transmission image is displayed on the display unit. In the X-ray inspection apparatus according to the fifth aspect, it is easy to ascertain the position of the undesirable part from the image displayed on the display unit even in cases such as that described above.

An X-ray inspection apparatus according to a sixth aspect of the present invention is the X-ray inspection apparatus according to any one of the first to fifth aspects, wherein the X-ray detector is configured to detect X-rays in a first energy band and X-rays in a second energy band. The display unit is configured to display, as the image of the product, either a first transmission image based on a result of detecting the X-rays in the first energy band or a second transmission image based on a result of detecting the X-rays in the second energy band for regions other than the undesirable part region, and a difference image representing a difference between the first transmission image and the second transmission image for the undesirable part region.

The undesirable part tends to be displayed in an emphasized manner in the difference image than in the X-ray transmission image. Therefore, in the X-ray inspection apparatus according to the sixth aspect, it is easy to ascertain the position of the undesirable part from the image displayed on the display unit.

An X-ray inspection apparatus according to a seventh aspect of the present invention is the X-ray inspection apparatus according to any one of the first to fifth aspects, wherein the X-ray detector is configured to detect X-rays in a first energy band and X-rays in a second energy band. The display unit is configured to display, as the image of the product, a difference image representing a difference between a first transmission image based on a result of detecting the X-rays in the first energy band and a second transmission image based on a result of detecting the X-rays in the second energy band.

In the X-ray inspection apparatus according to the seventh aspect, because the difference image in which the undesirable part is displayed in an emphasized manner is displayed as the image of the product, it is easy to ascertain the position of the undesirable part from the image displayed on the display unit.

An X-ray inspection apparatus according to an eighth aspect of the present invention is the X-ray inspection apparatus according to any one of the first to seventh aspects, wherein the assessment unit is configured to perform an overall process to apply the first criterion and assess whether an undesirable part is present by using a machine learning model, and a localized process to apply the second criterion and assess whether an undesirable part is present based on a predetermined rule. In cases where the assessment unit assesses that an undesirable part is included in the product in the overall process, the display unit is configured to display the result of detection of the undesirable part in the localized process in the undesirable part region within the image of the product.

In the X-ray inspection apparatus according to the eighth aspect, because a rule-based undesirable part detection result obtained upon raising the sensitivity in detection of undesirable parts is displayed in the undesirable part region, it is easy to ascertain the position of the undesirable part from the image displayed on the display unit.

An X-ray inspection apparatus according to a ninth aspect of the present invention comprises a conveying unit, an X-ray source, an X-ray detector, an image generation unit, an assessment unit, and a display unit. The conveying unit is configured to convey a product. The X-ray source is configured to irradiate X-rays on the product being conveyed by the conveying unit. The X-ray detector is configured to detect X-rays in a first energy band, and X-rays in a second energy band, that are irradiated on the product. The image generation unit is configured to generate a first transmission image based on a result of detecting the X-rays in the first energy band, a second transmission image based on a result of detecting the X-rays in the second energy band, and a difference image representing a difference between the first transmission image and the second transmission image. The assessment unit is configured to assess whether an undesirable part is present in the product by using the first transmission image, the second transmission image, or the difference image. The display unit is configured to display an image of the product. In a case where the assessment unit assesses that an undesirable part is included in an undesirable part region within the image of the product, the display unit is configured to display the difference image for the undesirable part region, and either the first transmission image or the second transmission image for regions other than the undesirable part region.

In the X-ray inspection apparatus according to the ninth aspect, because the difference image, which makes it easy to recognize the presence of an undesirable part, is displayed for the region in which the undesirable part is assessed to be present, it is easy to ascertain the position of the undesirable part from the image.

### <Effects of Invention>

The X-ray inspection apparatus according to the present invention is capable of displaying an image in which the position of an undesirable part in a product is easily recognized by a worker.

### BRIEF DESCRIPTION OF THE DRAWINGS

Fig. 1 An outline plan view of an inspection processing system provided with an X-ray inspection apparatus.
Fig. 2 An exterior perspective view of the X-ray inspection apparatus.
Fig. 3 A simplified configuration diagram of the interior of a housing of the X-ray inspection apparatus.
Fig. 4 A schematically drawn graph showing an X-ray transmission amount detected by a line sensor of the X-ray inspection apparatus.
Fig. 5 A block diagram of the X-ray inspection apparatus.
Fig. 6 A flow chart of a process performed by the X-ray inspection apparatus according to a first embodiment.
Fig. 7 A schematically drawn image of a product in which extraneous matter is present.
Fig. 8 An example of an inspection result image displayed by a prior-art X-ray inspection apparatus.
Fig. 9 An example of an inspection result image displayed by the X-ray inspection apparatus according to the first embodiment.
Fig. 10 Another example of an inspection result image displayed by the X-ray inspection apparatus according to the first embodiment.
Fig. 11 Another example of an inspection result image displayed by the X-ray inspection apparatus according to the first embodiment.
Fig. 12 Another example of an inspection result image displayed by the X-ray inspection apparatus according to the first embodiment.
Fig. 13 Another example of an inspection result image displayed by the X-ray inspection apparatus according to the first embodiment.
Fig. 14 Another example of a flow chart of a process performed by the X-ray inspection apparatus according to the first embodiment.
Fig. 15 Another example of a flow chart of a process performed by the X-ray inspection apparatus according to the first embodiment.

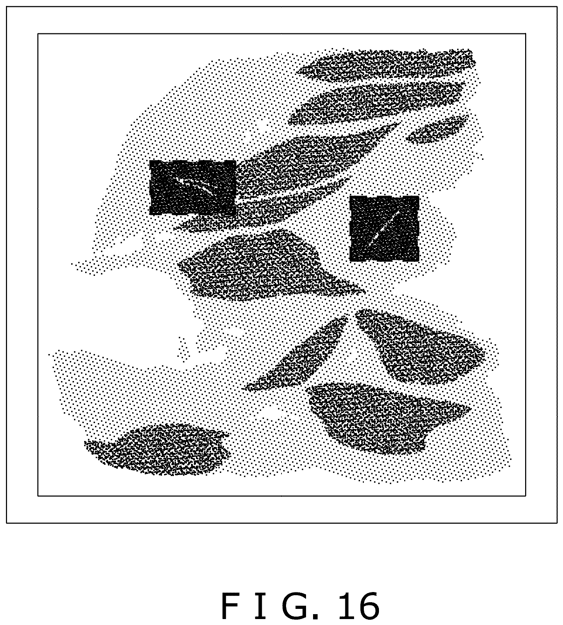

Fig. 16 An example of an inspection result image displayed by the X-ray inspection apparatus according to a second embodiment.

### DESCRIPTION OF EMBODIMENTS

### <First embodiment>

An X-ray inspection apparatus according to a first embodiment of the present invention and an inspection processing system provided with the X-ray inspection apparatus are described below with reference to the accompanying drawings. The embodiment described below is examples of the present invention but does not in any way limit the scope of the present invention.

### (1) Overall summary

An X-ray inspection apparatus 10 inspects whether an undesirable part is present in a product P on the basis of a transmission image. The X-ray inspection apparatus 10 displays an image of the product P as a result of inspection. The details of the inspection are not limited, but the X-ray inspection apparatus 10 according to the present embodiment performs an extraneous-matter inspection to inspect whether extraneous matter is present in the product P as the inspection of the product P. In the description of the embodiment below, there are cases where the term "extraneous matter" is used in lieu of the term "undesirable part." The undesirable part of the product P may be an undesirable shape, encroachment of the product into the seal part, a void present within the product, or the like.

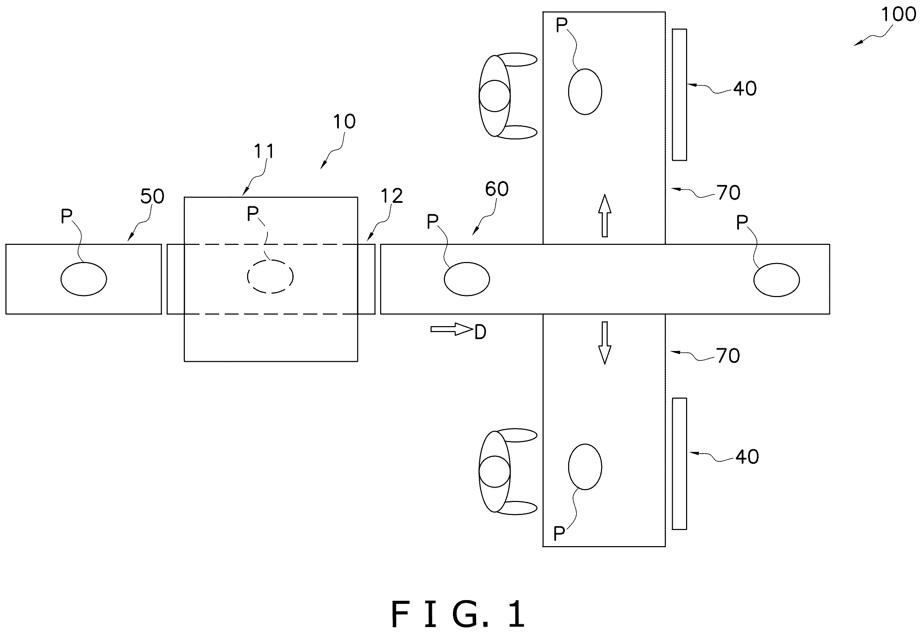

The application of the X-ray inspection apparatus 10 is not limited; for example, the X-ray inspection apparatus 10 is incorporated into an inspection processing system 100 to inspect a foodstuff (see Fig. 1). In the inspection processing system 100, the product (foodstuff) P to be inspected is conveyed by an upstream conveyor 50 to the X-ray inspection apparatus 10. The type of product P is not limited; the product P is, e.g., a slice of chicken or fish. The X-ray inspection apparatus 10 inspects the product P being conveyed and detects whether an undesirable part (in this case, extraneous matter such as bone) is present in the product P. The X-ray inspection apparatus 10 generates a transmission image obtained by irradiating X-rays on the product P or an image obtained by processing the transmission image, and displays the generated image on a first display 30 provided to the X-ray inspection apparatus 10 or on a second display 40 installed separately from a housing 11, which shall be described later. The second display 40 is installed in, e.g., a work area in which a process is performed on the product P as needed. In the present embodiment, a worker performs a process to remove extraneous matter included in the product P from the product P in the work area.

In the present embodiment, the product P inspected by the X-ray inspection apparatus 10 is conveyed by a downstream conveyor 60. Products P in which no extraneous matter is observed (desirable items) are conveyed to a subsequent step (e.g., a packaging step) by the downstream conveyor 60, and products P in which extraneous matter is observed (undesirable items) are sorted by a sorting mechanism (not shown) and conveyed to two work areas by a conveyor 70.

### (2) Detailed description

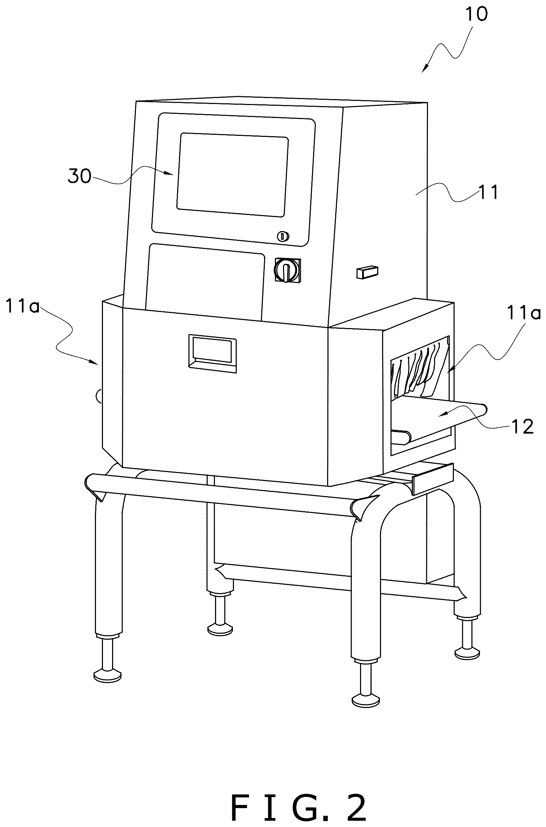

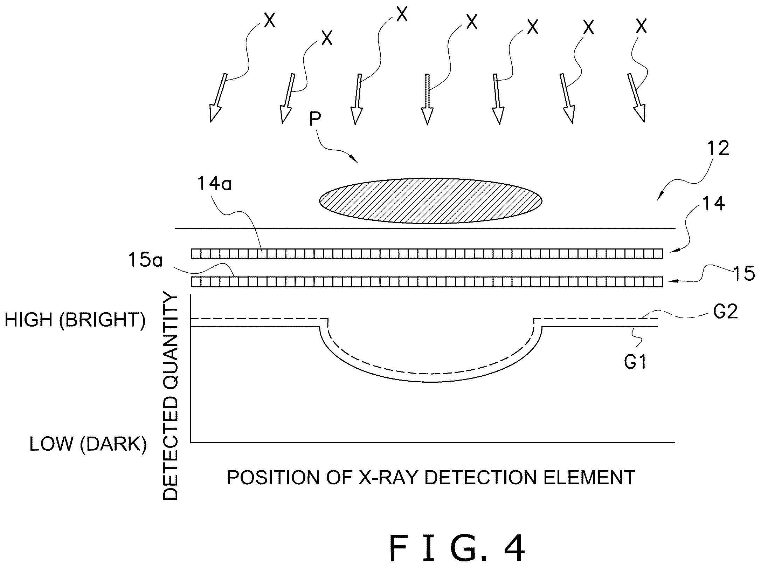

The X-ray inspection apparatus 10 mainly has a housing 11, a conveyor 12, an X-ray irradiator 13, a first line sensor 14, a second line sensor 15, a first display 30, a second display 40, and a controller 20, as shown in Figs. 2-5.

### (2-1) Housing

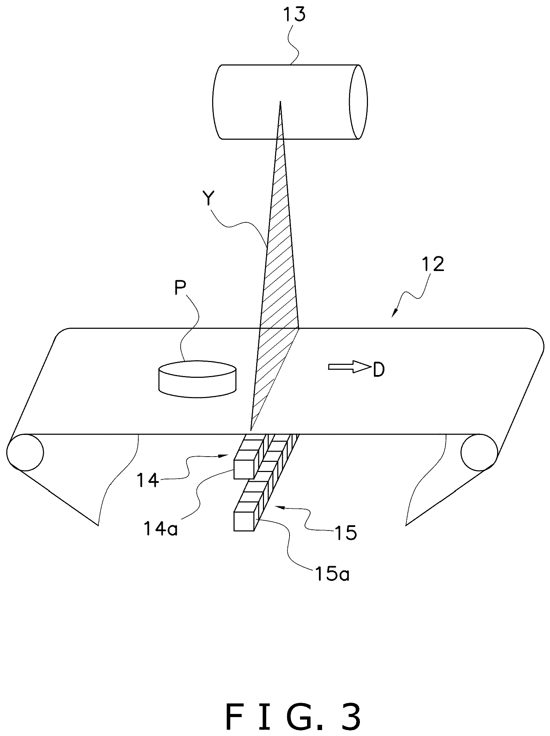

The housing 11 is a shield box to accommodate the conveyor 12, the X-ray irradiator 13, the line sensors 14, 15, and the controller 20. The display 30, etc., is installed on the upper portion of the housing 11. Openings 11a for enabling the product P to be transported in and out (see Fig. 2) are formed in side surfaces of the housing 11 that are upstream and downstream of the conveyor 12 in a conveying direction D (see Fig. 3).

### (2-2) Conveyor

The conveyor 12 is installed so as to pass through both openings 11a of the housing 11. The conveyor 12 receives the products P being conveyed by the upstream conveyor 50, passes the products P through an inspection area inside the housing 11, and sends the products that have passed through the inspection area to the downstream conveyor 60.

### (2-3) X-ray irradiator

The X-ray irradiator 13 is one example of an X-ray source. The X-ray irradiator 13 irradiates X-rays on the product P being conveyed by the conveyor 12. The X-ray irradiator 13 is installed above the conveyor 12, as shown in Fig. 2. The X-ray irradiator 13 emits the X-rays in a fan-form emission range Y toward the line sensors 14, 15, which are installed below the conveyor 12.

### (2-4) Line sensors

The line sensors 14, 15 are examples of X-ray detectors. The line sensors 14, 15 detect the X-rays that are emitted from the X-ray irradiator 13 and pass through the product P and the conveyor 12.

The first line sensor 14 and the second line sensor 15 detect X-rays of mutually different energy bands (wavelengths) that are irradiated on the product P. In this embodiment, the first line sensor 14 detects X-rays in a low-energy band (first energy band) having comparatively long wavelengths, and the second line sensor 15 detects X-rays in a high-energy band (second energy band) having comparatively short wavelengths.

In the present embodiment, the second line sensor 15 is installed below the first line sensor 14 so as to be vertically aligned therewith, as shown in Fig. 3. A filter (not shown) to remove X-rays in an intermediate-energy band is installed between the first line sensor 14 and the second line sensor 15.

The first line sensor 14 is mainly constituted of numerous X-ray detection elements 14a, and the second line sensor 15 is mainly constituted of numerous X-ray detection elements 15a (see Fig. 2). The X-ray detection elements 14a, 15a are installed horizontally and linearly in a direction orthogonal to the conveying direction D of the conveyor 12. The X-ray detection elements 14a, 15a detect, in regard to the X-rays in the respectively targeted energy bands, the amount of X-rays that are transmitted through the product P and the conveyor 12 (X-ray transmission amount), and output an X-ray transmission signal that corresponds to the X-ray transmission amount (the intensity of the detected X-rays).

Fig. 3 is a graph of an example of the transmitted X-ray amount detected by the X-ray detection elements 14a, 15a. By having two line sensors 14, 15 having different energy bands for detection, the X-ray inspection apparatus 10 obtains a graph of a detection result from the first line sensor 14 (solid line G1), and a graph of a detection result from the second line sensor 15 (dashed line G2).

The X-ray source according to the present invention does not necessarily have to have a plurality of line sensors; for example, the X-ray source may have a single direct-conversion line sensor that is capable of detecting X-rays through a photon counting scheme. A direct-conversion line sensor is a multi-energy sensor to detect X-rays in each of a plurality of energy regions passing through the product, the direct-conversion line sensor and includes photon-detecting sensors such as CdTe semiconductor detectors. In this line sensor, electron-hole pairs are generated by the arrival of X-ray photons, and energy (photon energy) is detected.

### (2-5) First display

The first display 30 is a display having a touch panel function.

The first display 30 functions as a display unit and an input unit. The first display 30 displays, e.g., an image (X-ray transmission image or clarification image) of the product P as an inspection result. The display 30 also accepts various settings and various items of information inputted from the worker.

### (2-6) Second displays

The second displays 40 function as display units. Each second display 40 displays, *inter alia,* the image of the product P as the inspection result for the products P conveyed to the work area where the second display 40 is installed.

### (2-7) Controller

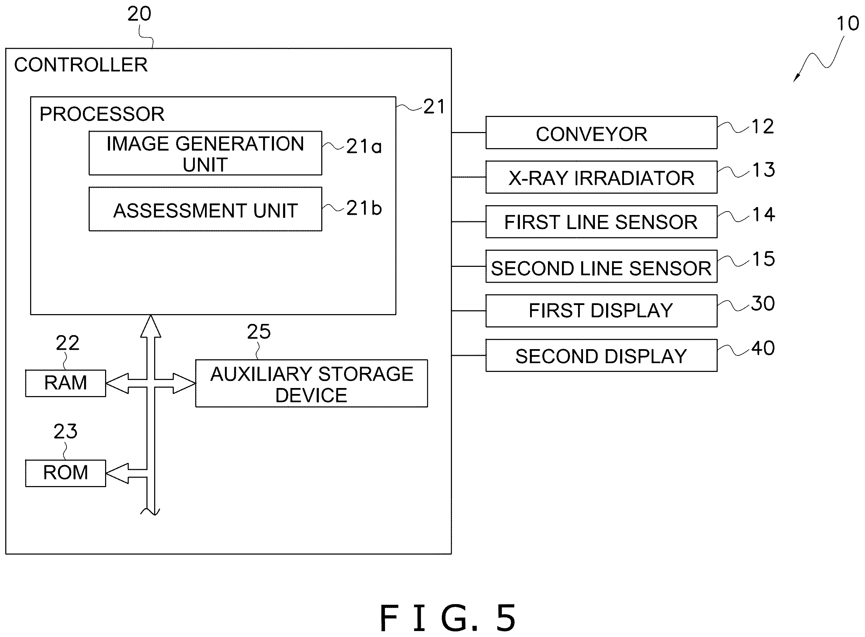

The controller 20 is electrically connected to the conveyor 12, the X-ray irradiator 13, the line sensors 14, 15, and the displays 30, 40 (see Fig. 5). The controller 20 controls the operations of each part of the X-ray inspection apparatus 10.

The controller 20 is a computer having, *inter alia,* a processor 21 (CPU, MPU, GPU, etc.), RAM 22, ROM 23, an auxiliary storage device 25 (HDD, SDD, etc.), as shown in Fig. 5. The processor 21, RAM 22, ROM 23, auxiliary storage device 25, and the like are interconnected via bus lines for address buses, data buses, or the like.

The ROM 23 and the auxiliary storage device 25 (hereinafter, the ROM 23 and the auxiliary storage device 25 are collectively referred to as a storage unit) store, *inter alia,* various programs executed by the processor 21, various items of information such as parameters and settings used for inspection, and inspection results. The parameters used for inspection stored in the storage unit are parameters necessary for determining whether or not extraneous matter is present in the products P, and include, for example, threshold values of the transmitted X-ray amount (e.g., a first threshold value and a second threshold value, which shall be described later) to distinguish between extraneous matter and the products P. The settings used for inspection stored in the storage unit include, for example, information on the inspection speed of the products P.

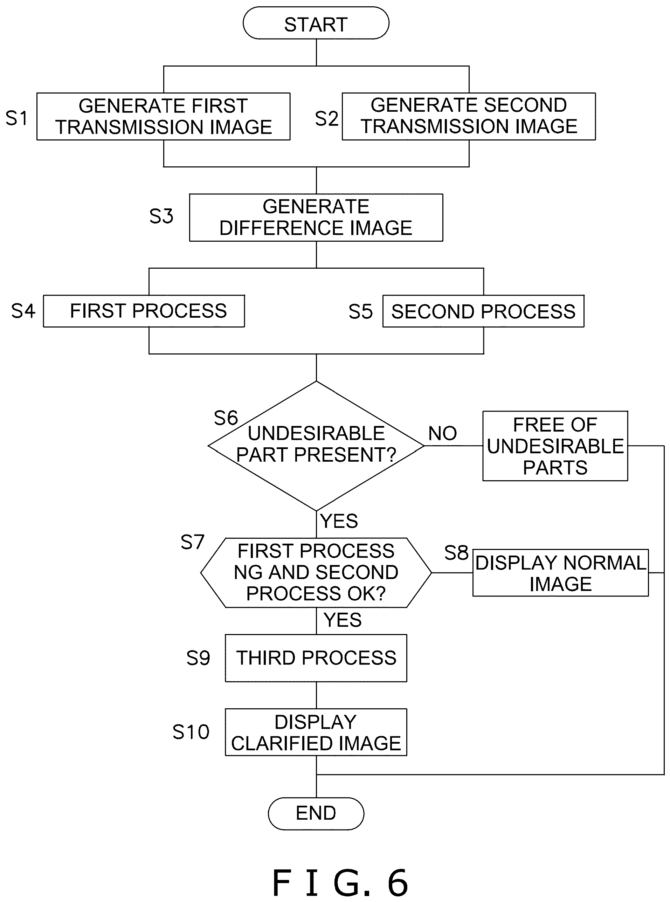

The processor 21 executes a program stored in the storage unit, thereby functioning as, e.g., an image generation unit 21a and an assessment unit 21b. The image generation unit 21a generates, *inter alia,* an X-ray transmission image, a difference image (which shall be described later), and an image of the product P to be displayed on the displays 30, 40 as an inspection result, based on the X-rays detected by the line sensors 14, 15. The assessment unit 21b assesses whether extraneous matter is present in the product P by using a first transmission image, a second transmission image, or the difference image (an inspection target image that is obtained from X-ray transmission images, all of such images being described later). An inspection performed by the X-ray inspection apparatus 10 using the image generation unit 21a and the assessment unit 21b, and a process to display an inspection result on the displays 30, 40, shall be described below with reference to the flow chart in Fig. 6.

When the controller 20 acquires, from the line sensors 14, 15, an inspection result pertaining to the X-rays irradiated on the product P, the image generation unit 21a generates the first transmission image on the basis of an X-ray transmission amount for low-energy-band X-rays detected by the first line sensor 14 (step S1), and generates the second transmission image on the basis of an X-ray transmission amount for high-energy-band X-rays detected by the second line sensor 15 (step S2).

The image generation unit 21a furthermore performs a subtraction process using the first and second transmission images to generate a difference image (step S3). For example, the image generation unit 21a adjusts luminance values (grayscale values) of portions corresponding to the product P between the first and second transmission images (for example, by multiplying luminance values of the pixels of the second transmission image by a luminance conversion function prepared according to the type of product P), then performs a difference process to calculate the difference in the luminance values of each pixel, and generates a difference image in which the difference between the luminance values of the pixels corresponding to the extraneous matter F and the luminance values of the pixels not corresponding to the extraneous matter F is large. When performing the subtraction process, the image generation unit 21a actually also performs processing such as size matching between the first and second transmission images (see Patent Literature 2 (Japanese Laid-open Patent Publication No. 2012-73056)), but an explanation of this processing is not provided here.

Next, the assessment unit 21b determines, on the basis of the generated difference image, whether extraneous matter is present in the product P. Specifically, the assessment unit 21b performs a first process (step S4) and a second process (step S5) using the difference image. The assessment unit 21b may perform the first process and the second process and determine whether extraneous matter is present in the product P by using the first transmission image or the second transmission image instead of the difference image.

In the first process, the assessment unit 21b uses a machine learning model applying a first criterion to assess whether extraneous matter is present in the product P. In the second process, the assessment unit 21b assesses, using the first criterion, whether extraneous matter is present in the product P on the basis of a predetermined rule. The first criterion is that there is little possibility that the assessment unit 21b will erroneously assess that extraneous matter is present.

In step S4, the assessment unit 21b uses a machine learning model that employs methods such as neural networks, support vector machines, and random forests which use training data (difference image data for the product P without extraneous matter and difference image data of the product P with extraneous matter) to determine whether extraneous matter is present in the product P based on the difference image of the product P. The machine learning model used is trained such that the possibility that it will be impossible to detect the presence of extraneous matter is equal to or less than a first prescribed value, and the probability that a portion where only the product P is present will be erroneously assessed to be extraneous matter is equal to or less than a second prescribed value.

In step S5, the assessment unit 21b assesses (inspects) whether extraneous matter is present in the product P according to whether pixels that are brighter/darker than a prescribed first threshold value are present within the region where the product P is present in the difference image (i.e., by using the first criterion). As the first threshold value (i.e., the first criterion), a criterion configured such that the assessment unit 21b does not assess a reference luminance value of pixels showing the product P in the difference image to be extraneous matter is used. The reference luminance value is representative of the luminance of the product P and is, for example, a value derived from a numeric distribution of luminance values of the pixels corresponding to the product P in the difference image obtained for a sample of the product P where no extraneous matter is present, such as an average value µ, µ ± 2σ (where σ is a standard deviation), a maximum value Vmax of the luminance values, and a minimum value Vmin of the luminance values.

For example, it is assumed to be the case that the pixels corresponding to extraneous matter in the difference image will be displayed brighter than the pixels corresponding to the product P. In this case, for example, the reference luminance value is µ + 2σ, and a value of µ + 3σ may be used as the first threshold value. In cases where the assessment unit 21b assesses pixels exceeding the first threshold value (µ + 3σ) to be extraneous matter, the assessment unit 21b does not assess pixels having the reference luminance value (µ + 2σ) to be extraneous matter, and the possibility that the assessment unit 21b will erroneously assess the product P to be extraneous matter is approximately 0.3% in cases where the numeric distribution of the luminance values in the sample of the product P is a normal distribution. Alternatively, for example, the reference luminance value is Vmax, and a value that is greater than the maximum value Vmax and less than a minimum value of luminance that is assumed to be extraneous matter is used as the first threshold value (lower-limit value). In cases where the assessment unit 21b assesses pixels exceeding the first threshold value (value greater than Vmax) to be extraneous matter, the assessment unit 21b does not assess pixels having the reference luminance value Vmax to be extraneous matter, and the possibility that the assessment unit 21b will erroneously assess the product P to be extraneous matter will be very low.

In cases where the pixels corresponding to extraneous matter in the difference image are displayed darker than the pixels corresponding to the product P, the first threshold value is to be established using an approach similar to that described above (the first threshold value is determined to be smaller than the reference luminance value).

In cases where it is assessed that no extraneous matter is present in the product P (No in step S6) in both the first process (step S4) and the second process (step S5), the assessment unit 21b determines that the product P is "free of undesirable parts (a desirable item)" and terminates the inspection. In cases where it is assessed that extraneous matter is present in the product P (Yes in step S6) in either one of the first process or the second process, the assessment unit 21b determines that the product P is "an undesirable item" and thus advances to the process in step S7.

In step S7, the controller 20 determines whether a portion that is assessed to include extraneous matter (NG) in the first process and is assessed to be free of extraneous matter (OK) in the second process is present within the difference image of the product P.

In cases where the condition of step S7 is not met, i.e., cases where extraneous matter is determined to be present in the rule-based assessment, it is highly likely that a position where the extraneous matter is present in the first transmission image or the second transmission image will be able to be visually recognized, and the controller 20 therefore displays an ordinary image (in this instance, the first transmission image or the second transmission image is referred to as an ordinary image), together with the inspection result indicating that the product P is an undesirable item (includes extraneous matter), on the first display 30 and the second display 40 that is installed in the work area to which the product P being inspected is conveyed (step S8). In this instance, the controller 20 may display a mark or the like to indicate a location (region) that is assessed to include the extraneous matter in the first process or the second process within the ordinary image.

In cases where the condition of step S7 is met, i.e., cases where a site that is assessed to include extraneous matter in only the first process (AI) is present within the difference image of the product P, it may be difficult to recognize the position where the extraneous matter is present from the ordinary image even if the ordinary image is displayed on the displays 30, 40.

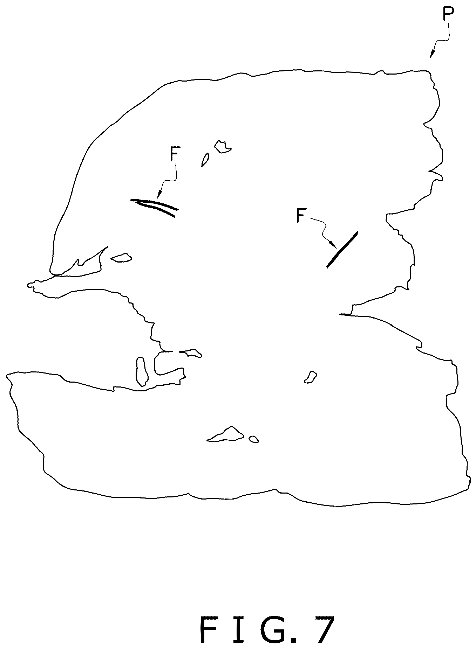

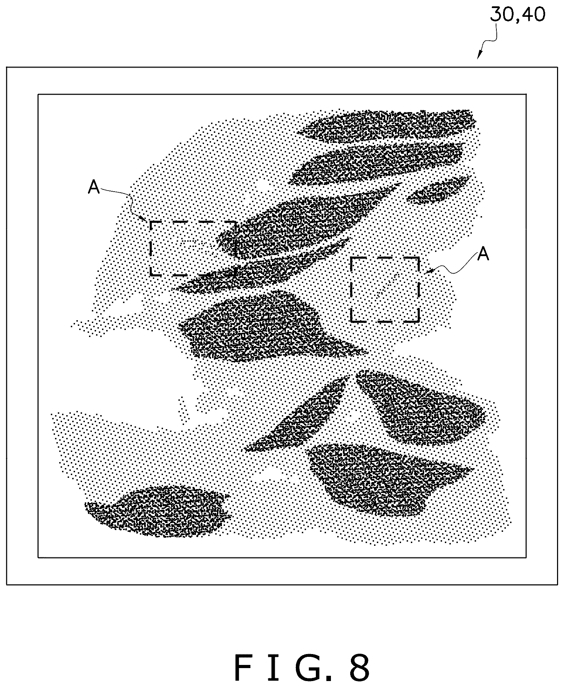

For example, in cases where extraneous matter F is present in the product P at a position such as that shown in Fig. 7, and where the extraneous matter F is detected in only the first process, the ordinary image displayed on the displays 30, 40 (in this instance, the first transmission image) may be an image such as that shown in Fig. 8. In the first transmission image in Fig. 8, regions where extraneous matter is assessed to be present in the first process are indicated using dashed lines. In a conventional X-ray inspection apparatus 10, such an image is displayed on a display unit as an inspection result.

However, for the reasons indicated below, it may be difficult for a worker to accurately recognize the position of the extraneous matter F from an image such as that shown in Fig. 8.

It is not ordinarily the case that machine learning models assess whether extraneous matter is present according to a simple comparison between pixel luminance and a threshold value. Therefore, there are many cases where it is generally difficult to identify the position of extraneous matter in a detailed manner as a result of the first process. Specifically, it is difficult for a computer to surround only the precise position where extraneous matter is present with a frame in an ordinary image (as shown in Fig. 8, areas that are broader than the regions where the extraneous matter F is actually present are identified as undesirable part regions A where extraneous matter is present). Additionally, in cases where the extraneous matter F is detected only in the first process, there are many cases involving circumstances in which there is no great difference between the pixels corresponding to the extraneous matter F and the pixels corresponding to the product P, or in which the extraneous matter F is too small, and it is generally not easy for a worker to accurately recognize the position of the extraneous matter F from the luminance of the pixels in the ordinary image.

Accordingly, to make it possible for a worker to easily recognize the position of the extraneous matter F from an image of the product P displayed on the displays 30, 40 in the present X-ray inspection apparatus 10, in cases where the condition of step S7 is met, the assessment unit 21b applies a second criterion and assesses whether extraneous matter is present (performs a third process) for an undesirable part region A (see Fig. 8) in the difference image that is assessed to include extraneous matter in the assessment (first assessment) in which the first criterion is applied (step S9), and when displaying an image of the product P that includes the undesirable part on the displays 30, 40, the result of having detected the extraneous matter in the third process is displayed for the undesirable part region A (see Fig. 8). The second criterion yields a higher sensitivity in detection of undesirable parts (extraneous matter) than the first criterion. However, the second criterion also increases the possibility that the assessment unit 21b will erroneously assess the pixels that show the product P in the difference image to be extraneous matter, in comparison with cases where the first criterion is used.

In the third process performed in step S9, the assessment unit 21b assesses whether extraneous matter is present in the product P on the basis of a predetermined rule, in the same manner as in the second process, for the undesirable part region A (see dashed lines in Fig. 8) that is assessed to include extraneous matter in the first process in which the first criterion is applied. However, in the third process, the assessment unit 21b uses a second threshold value (second criterion) that yields a higher sensitivity in detection of undesirable parts (extraneous matter) than the first threshold value described above.

For example, it is assumed to be the case that the pixels corresponding to extraneous matter in the difference image will be displayed brighter than the pixels corresponding to the product P. In this case, a value lower than the first threshold value is used as the second threshold value. For example, in cases where the first threshold value is µ + 3σ as described above, µ + 2σ (the reference luminance value) is used as the second threshold value (where µ and σ are defined as described above). Alternatively, for example, in cases where the first threshold value is a value greater than Vmax as described above, Vmax (the reference luminance value) is used as the second threshold value. Specifically, the second threshold value (second criterion) is a luminance value at which the assessment unit 21b assesses the reference luminance value, which is representative of the luminance of the product P in the difference image, to be extraneous matter F. Although there is a possibility that comparatively bright pixels among the pixels corresponding to the product P will be assessed to be extraneous matter F, using this second threshold value makes it easier to detect even extraneous matter that is difficult to detect in the second process due to circumstances in which, *inter alia,* there is substantially no difference in X-ray transmissivity between the product P and the extraneous matter F, or the extraneous matter F is of small size.

In cases where the pixels corresponding to extraneous matter in the difference image are displayed darker than the pixels corresponding to the product P, the second threshold value is to be established using an approach similar to that described above.

In the foregoing, a case where the presence of extraneous matter is assessed on the basis of a predetermined rule in the third process is described as an example, but it is also permissible for the assessment unit 21b to have a machine learning model in which the second criterion that yields a higher sensitivity in detection of undesirable parts than the first criterion is applied, in addition to the machine learning model in which the first criterion is applied, and the assessment unit 21b may assess, in the third process, whether extraneous matter is present by using the machine learning model in which the second criterion is applied.

In step S10, the controller 20 displays a clarification image, together with the inspection result indicating that the product P is an undesirable item (includes extraneous matter), on the first display 30 and the second display 40 that is installed in the work area to which the product P is conveyed (step S10).

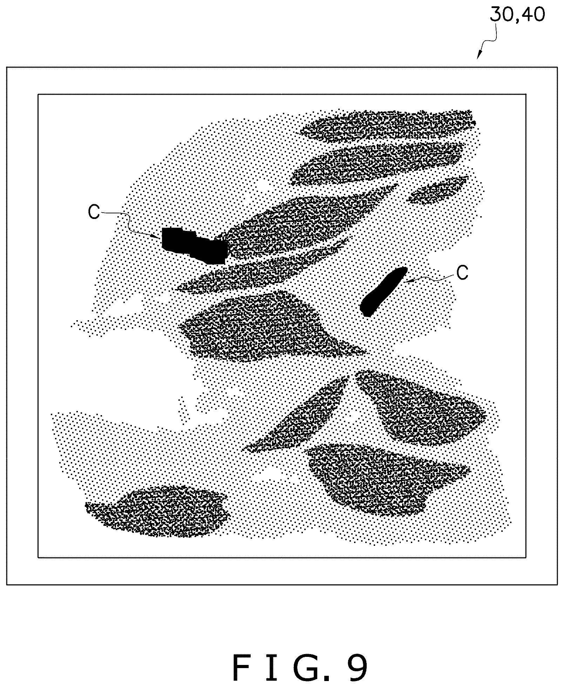

The clarification image is an image of the product P in which a result of the assessment unit 21b having applied the second criterion to detect the undesirable part is displayed for the undesirable part region A that is assessed to include the undesirable part upon application of the first criterion (i.e., is an image in which the position of the undesirable part is clarified). Specific examples of clarification images shall now be described with reference to Figs. 9 to 13.

In the clarification image in Fig. 9, a portion C where the undesirable part is detected to be present upon application of the second criterion in the third process, within the first transmission image (or the second transmission image) of the product P, is displayed in a hue, brightness, or saturation (i.e., a different color) that enables the portion C to be distinguished from portions other than the portion C.

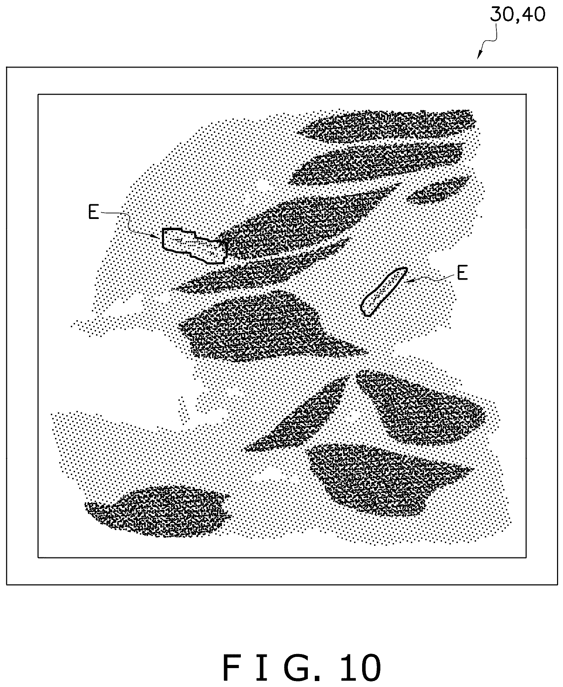

In the clarification image in Fig. 10, a portion where the undesirable part is detected to be present upon application of the second criterion in the third process, within the first transmission image (or the second transmission image) of the product P, is displayed such that said portion is surrounded by a frame E.

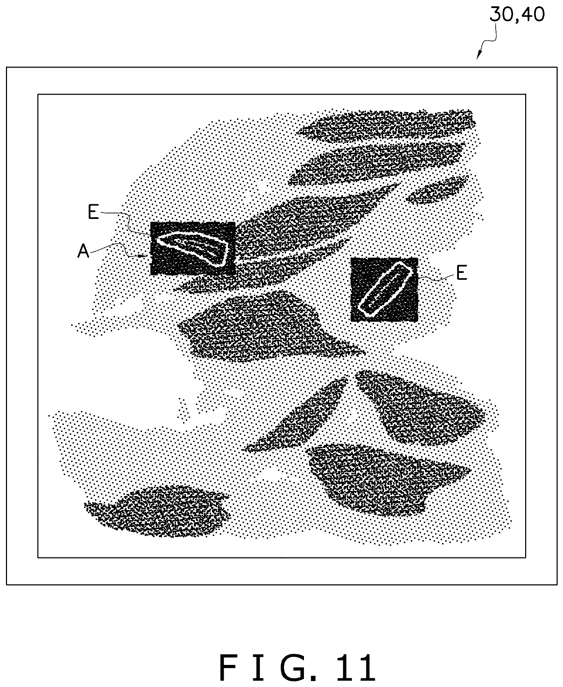

The clarification image in Fig. 11 is generated by the image generation unit 21a such that only the undesirable part region A that is assessed to include the undesirable part upon application of the first criterion (through the first process), within the first transmission image (or the second transmission image) of the product P, is replaced with the difference image, and furthermore such that a portion where the undesirable part is detected to be present upon application of the second criterion in the third process, within the generated image, is displayed by surrounding with a frame E.

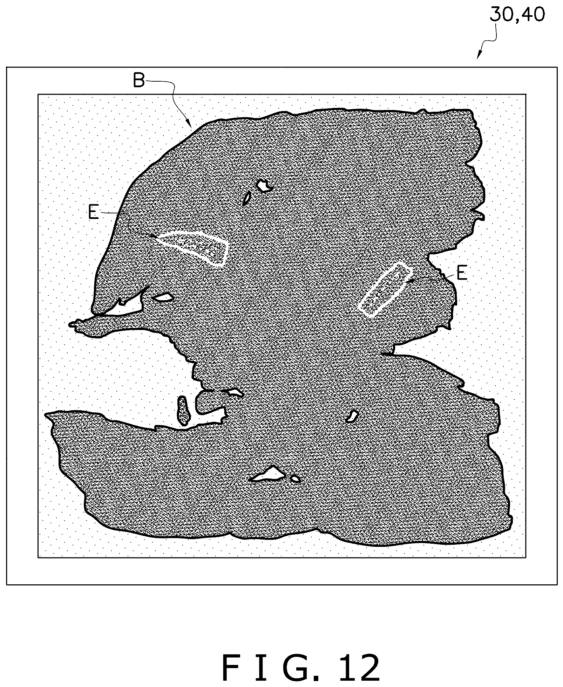

The clarification image in Fig. 12 is generated by the image generation unit 21a such that a boundary between the product P and a background in the difference image of the product P is surrounded by a frame B (to clarify the outline of the product P in the difference image), and furthermore such that a portion where the undesirable part is detected to be present upon application of the second criterion in the third process, within the generated image, is displayed by surrounding with a frame E.

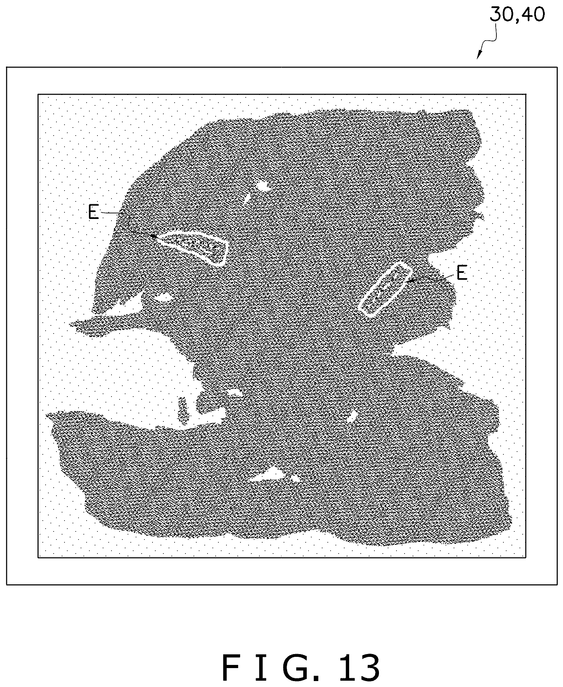

The clarification image in Fig. 13 is an image in which a portion where the undesirable part is detected to be present upon application of the second criterion in the third process, within the difference image of the product P, is displayed by surrounding a frame E.

By displaying the clarification images of Figs. 9 to 13 on the displays 30, 40, it is easy for a worker to recognize the portion in which extraneous matter F is present from the clarification image. Additionally, when the clarification images in Figs. 9 to 13 are displayed on the displays 30, 40, even in cases where the extraneous matter F is small (e.g., cases where the extraneous matter F breaks when being removed in a prior step and fragments of the extraneous matter F remain in the product P), it is easy for the worker to recognize that such small extraneous matter F is present.

In the foregoing, the extraneous-matter inspection performed by the controller 20 of the X-ray inspection apparatus 10 and the process to display an inspection result on the displays 30, 40 is described with reference to Fig. 6, but the process performed by the controller 20 can be changed as appropriate.

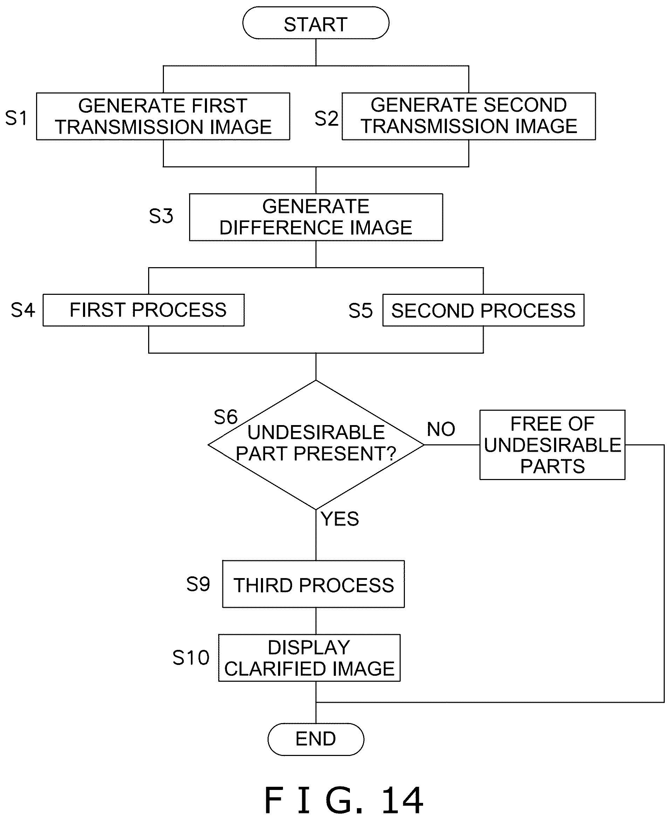

For example, the processes in step S7 and step S8 in Fig. 6 are not essential, and it is permissible for the controller 20 to be designed such that, in cases where it is determined in step S6 that an undesirable part is present, the controller 20 advances to the process in step S9, as shown in Fig. 14.

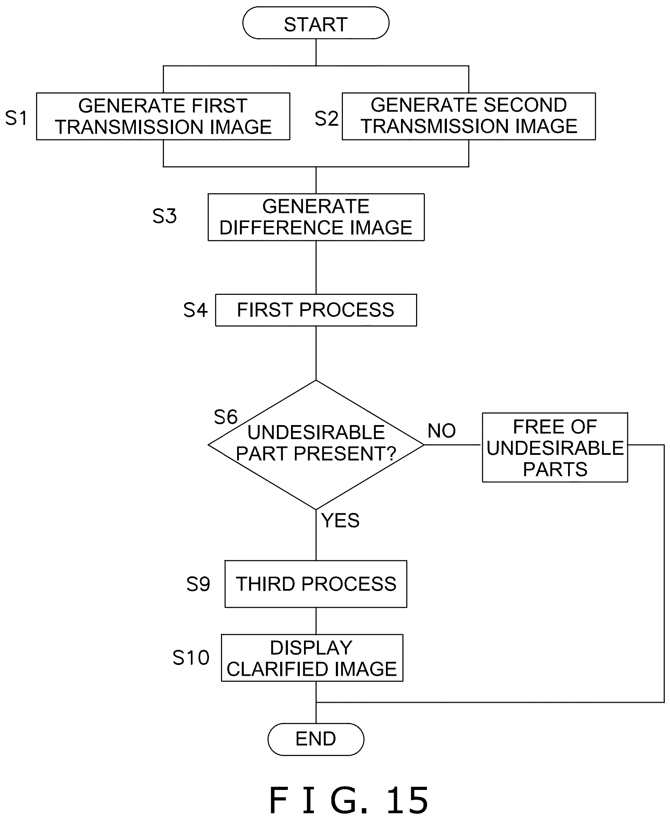

Additionally, for example, it is permissible for the second process in step S5 to be omitted and for the controller 20 to be designed such that, in cases where it is determined in step S6 (i.e., step S4) that an undesirable part is present, the controller 20 advances to the process in step S9, as shown in Fig. 15. In other words, the assessment unit 21b may have, as an inspection mode, an overall process (first process) to apply the first criterion and assess whether an undesirable part is present by using a machine learning model, and a localized process (third process) to apply the second criterion that yields a higher sensitivity in detection of undesirable parts than the first criterion and assess whether an undesirable part is present on the basis of a predetermined rule. In cases where the assessment unit 21b assesses that an undesirable part is included in the product P in the overall process, the assessment unit 21b may perform the third process in the undesirable part region A within the image of the product, i.e., the undesirable part region A in the difference image of the product P where it is assessed that extraneous matter F is present in the overall process.

### (3) Features

(3-1)
The X-ray inspection apparatus 10 comprises the conveyer 12 that serves as a conveying unit to convey a product P, the X-ray irradiator 13 that serves as an X-ray source to irradiate X-rays on the product P being conveyed by the conveyor 12, the X-ray detector (line sensors 14, 15) to detect the X-rays irradiated on the product P, the image generation unit 21a, the assessment unit 21b, and the display unit (displays 30, 40). The image generation unit 21a generates an X-ray transmission image on the basis of the X-rays detected by the X-ray detector. The assessment unit 21b assesses whether an undesirable part is present in the product P by using an inspection target image (difference image) that is obtained from the X-ray transmission image. The display unit displays an image of the product P. The display unit displays, in cases where the assessment unit 21a applies a first criterion to perform assessment and assesses that an undesirable part is included in the product P, a result of the detection in which the assessment unit 21b applies a second criterion that yields a higher sensitivity in detection of undesirable parts than the first criterion to detect the undesirable part, in an undesirable part region A that is assessed to include the undesirable part upon application of the first criterion within the image of the product P.

In the X-ray inspection apparatus 10, because an undesirable part detection result obtained upon raising the sensitivity in detection of undesirable parts is displayed in the undesirable part region A that includes the undesirable part, it is easy to ascertain the position of the undesirable part from the clarification image even in a case where the luminance of pixels showing the product P and the luminance of pixels showing the undesirable part are comparatively similar and in a case where the undesirable part is of small size.

When, unlike with the X-ray inspection apparatus 10, the second criterion that has higher sensitivity in detection of undesirable parts is applied to detect the undesirable part, it is highly likely that a portion of the product P where no undesirable part is present will be erroneously assessed to include an undesirable part. However, in the present X-ray inspection apparatus 10, the first criterion, which does not readily lead to erroneous assessment, is used first in assessment of undesirable parts, and therefore erroneous assessment such as that described above does not readily occur.

(3-2)
As a result of the undesirable part being detected upon application of the second criterion, the display unit displays a portion where the undesirable part is detected to be present upon application of the second criterion such that the portion is surrounded by a frame E (see Figs. 10 to 13). Alternatively, as a result of the undesirable part being detected upon application of the second criterion, the display unit displays a portion where the undesirable part is detected to be present upon application of the second criterion such that the portion is displayed in a hue, brightness, or saturation that enables the portion to be distinguished from portions other than the portion where the undesirable part is detected to be present upon application of the second criterion (see Fig. 9).

In this X-ray inspection apparatus 10, because the portion where the undesirable part is detected to be present upon application of the second criterion is displayed using a frame or a color, it is easy to ascertain the position of the undesirable part from the clarification image.

(3-3)
The aforementioned first criterion may be a criterion that the assessment unit 21b does not assess a reference luminance value (e.g., µ, µ + 2 σ, a maximum value, a minimum value, or the like, as described above) of pixels showing the product P in the difference image, which is an inspection target image, to be an undesirable part.

Using this first criterion makes it possible to reduce the possibility that the product P will be determined to be an undesirable part when the first criterion is applied to assess whether an undesirable part is present.

Additionally, the aforementioned second criterion may be a luminance value at which the assessment unit 21b assesses a reference luminance value of pixels showing the product P in the difference image, which is an inspection target image, to be an undesirable part.

Because the presence of the undesirable part is assessed using this second criterion, it is easy to ascertain the position of the undesirable part from the clarification image even in a case where the luminance of pixels showing the product P and the luminance of pixels showing the undesirable part are comparatively similar and in a case where the undesirable part is of small size.

(3-4)
The assessment unit 21b may perform, using the first criterion, a first process to assess whether an undesirable part is present by using a machine learning model and a second process to assess whether an undesirable part is present on the basis of a predetermined rule. In a case where the assessment unit 21b assesses that an undesirable part is included in the product P in the first process and assesses that undesirable part is not included in the product P in the second process, the display unit may display, in the undesirable part region A, a result of having applied the second criterion to detect the undesirable part.

There are cases where an undesirable part that is difficult to detect using a rule-based algorithm can be detected in the assessment of whether an undesirable part is present in which the machine learning model is used. However, in the case of an undesirable part that can be detected by the machine learning model but is difficult to detect on the basis of a predetermined rule, it is highly likely that it will be difficult to ascertain the position of the undesirable part from the image of the product P even if the first transmission image of the product P is displayed on the display unit. However, in the X-ray inspection apparatus 10, because the clarification image is displayed, it is easy to ascertain the position of the undesirable part even in cases such as that described above.

(3-5)
The X-ray detector detects X-rays in a first energy band and X-rays in a second energy band. As the image of the product P, the display unit may display either a first transmission image based on a result of detecting the X-rays in the first energy band or a second transmission image based on a result of detecting the X-rays in the second energy band for regions other than the undesirable part region A, and may display a difference image representing a difference between the first transmission image and the second transmission image for the undesirable part region A (see Fig. 11).

It is easier to display the undesirable part in an emphasized manner in the difference image than in the X-ray transmission image. Therefore, in the X-ray inspection apparatus 10, it is easy to ascertain the position of the undesirable part from the clarification image.

(3-6)
As the image of the product P, the display unit may display a difference image representing a difference between a first transmission image based on a result of detecting the X-rays in the first energy band and a second transmission image based on a result of detecting the X-rays in the second energy band (see Figs. 12 and 13).

In the X-ray inspection apparatus 10, because the difference image in which the undesirable part is displayed in an emphasized manner is displayed as the image of the product P, it is easy to ascertain the position of the undesirable part from the clarification image.

(3-7)
The assessment unit 21b may perform an overall process (first process) to apply the first criterion and assess whether an undesirable part is present by using a machine learning model, and a localized process (third process) to apply the second criterion and assess whether an undesirable part is present on the basis of a rule (see Fig. 15). In cases where the assessment unit 21b assesses that an undesirable part is included in the product P in the overall process, the display unit displays a result of the assessment unit 21b having detected an undesirable part in the localized process in the undesirable part region A within the image of the product P.

There are cases where an undesirable part that is difficult to detect using a rule-based algorithm can be detected in the assessment of whether an undesirable part is present in which the machine learning model is used, but there are also cases where it is difficult to ascertain the position where an undesirable part is present from an image of the product P even when the image of the product P is displayed on the display unit. However, in this instance, using the localized process makes it easy to ascertain the position of the undesirable part from the clarification image.

### <Second embodiment>

The X-ray inspection apparatus is also thought to be configured as described below from the standpoint of solving the problem of presenting an image in which the position of an undesirable part in a product can easily be recognized by a worker.

The physical configuration of an X-ray inspection apparatus 10 according to the second embodiment is the same as that in the first embodiment, and thus no description shall be given for the physical configuration of the X-ray inspection apparatus 10 according to the second embodiment.

The difference between the X-ray inspection apparatus 10 according to the second embodiment and the X-ray inspection apparatus 10 according to the first embodiment is that the assessment unit 21b does not perform a process to apply a second criterion and detect an undesirable part. Instead, the X-ray inspection apparatus 10 according to the second embodiment performs the process described below.

The process executed by the X-ray inspection apparatus 10 according to the second embodiment is the same as that in Fig. 6, Fig. 14, or Fig. 15 of the first embodiment until step S6 (whether to perform the processes in steps S7 and S8 in Fig. 6 is a discretionary matter). The assessment unit 21b may perform the first process (S4) and the second process (S5) using the first transmission image or the second transmission image instead of the difference image to determine whether extraneous matter is present in the product P.

In the X-ray inspection apparatus 10 according to the second embodiment, the third process is not performed in step S9; instead, the image generation unit 21a generates a clarification image in which only the undesirable part region A that is assessed to include an undesirable part according to the first process (or the second process), in the first transmission image or the second transmission image of the product P, is replaced with the difference image (see Fig. 15), and displays the clarification image on the display unit (displays 30, 40). In this situation as well, it is easy to ascertain the position where the undesirable part is present from the generated clarification image.

### <Modifications>

### (1) Modification A

In the first embodiment, a case where X-rays in a plurality of energy bands are detected by the X-ray detector, and where the presence of an undesirable part in the product P is assessed on using the difference image, is described as an example of the present invention. However, it is not essential to detect X-rays in a plurality of energy bands or use a difference image in inspection. For example, in the first to third processes described in the first embodiment, it is permissible to assess whether an undesirable part is present in the product P by using a single X-ray transmission image.

### REFERENCE SIGNS LIST

- 10:: X-ray inspection apparatus
- 12:: Conveyor (conveying unit)
- 13:: X-ray irradiator (X-ray source)
- 14:: First line sensor (X-ray detector)
- 15:: Second line sensor (X-ray detector)
- 15a:: X-ray detection element
- 21a:: Image generation unit
- 21b:: Assessment unit
- 30:: First display (display unit)
- 40:: Second display (display unit)

### CITATION LIST

### PATENT LITERATURE

[Patent Literature 1] Japanese Laid-open Patent Publication No. 2019-107605

## Claims

1. An X-ray inspection apparatus comprising:
a conveying unit configured to convey an object;
an X-ray source configured to emit X-rays on the object being conveyed by the conveying unit;
an X-ray detector configured to detect the X-rays that have passed through the object;
an image generation unit configured to generate an X-ray transmission image based on the X-rays detected by the X-ray detector;
an assessment unit configured to assess whether an undesirable part is present in the object by using the X-ray transmission image or an inspection target image that is obtained from the X-ray transmission image; and
a display unit configured to display an image of the object, wherein
in a case where the assessment unit assesses that an undesirable part is included in an undesirable part region in the image of the object based on assessment that applies a first criterion, the display unit is configured to display a result of a detection in which the assessment unit applies a second criterion in the undesirable part region in the image of the object, the second criterion having a higher sensitivity in detection of an undesirable part than the first criterion.

2. The X-ray inspection apparatus according to claim 1, wherein
the display unit is configured to display, as a result of the undesirable part being detected upon application of the second criterion, a portion where the undesirable part is detected to be present upon application of the second criterion such that the portion is surrounded by a frame or such that the portion is displayed in a hue, brightness, or saturation that enables the portion to be distinguished from portions other than the portion where the undesirable part is detected to be present upon application of the second criterion.

3. The X-ray inspection apparatus according to claim 1 or 2, wherein
the first criterion is set so that the assessment unit does not assess a reference luminance value of pixels corresponding to the object in the inspection target image to be an undesirable part.

4. The X-ray inspection apparatus according to any one of claims 1 to 3, wherein
the second criterion is set so that the assessment unit assesses the reference luminance value of pixels corresponding to the object in the inspection target image to be an undesirable part.

5. The X-ray inspection apparatus according to any one of claims 1 to 4, wherein
the assessment unit is configured to perform, using the first criterion, a first process to assess whether an undesirable part is present by using a machine learning model and a second process to assess whether an undesirable part is present based on a predetermined rule, and
in a case where the assessment unit assesses that an undesirable part is included in the object in the first process and assesses that undesirable part is not included in the object in the second process, the display unit is configured to display the result of detection in which the assessment unit applies the second criterion in the undesirable part region in the image of the object.

6. The X-ray inspection apparatus according to any one of claims 1 to 5, wherein
the X-ray detector is configured to detect X-rays in a first energy band and X-rays in a second energy band, and
the display unit is configured to display, as the image of the object,:
either a first transmission image based on a result of detecting the X-rays in the first energy band or a second transmission image based on a result of detecting the X-rays in the second energy band for regions other than the undesirable part region, and
a difference image representing a difference between the first transmission image and the second transmission image for the undesirable part region.

7. The X-ray inspection apparatus according to any one of claims 1 to 5, wherein
the X-ray detector is configured to detect X-rays in a first energy band and X-rays in a second energy band, and
the display unit is configured to display, as the image of the object, a difference image representing a difference between a first transmission image based on a result of detecting the X-rays in the first energy band and a second transmission image based on a result of detecting the X-rays in the second energy band.

8. The X-ray inspection apparatus according to any one of claims 1 to 7, wherein
the assessment unit is configured to perform an overall process to apply the first criterion and assess whether an undesirable part is present by using a machine learning model, and a localized process to apply the second criterion and assess whether an undesirable part is present based on a predetermined rule, and
in cases where the assessment unit assesses that an undesirable part is included in the object in the overall process, the display unit is configured to display the result of the detection of the undesirable part in the localized process in the undesirable part region within the image of the object.

9. An X-ray inspection apparatus comprising:
a conveying unit configured to convey a object;
an X-ray source configured to irradiate X-rays on the object being conveyed by the conveying unit;
an X-ray detector configured to detect X-rays in a first energy band, and X-rays in a second energy band, that have passed through the object;
an image generation unit configured to generate a first transmission image based on a result of detecting the X-rays in the first energy band, a second transmission image based on a result of detecting the X-rays in the second energy band, and a difference image representing a difference between the first transmission image and the second transmission image;
an assessment unit configured to assess whether an undesirable part is present in the object by using the first transmission image, the second transmission image, or the difference image; and
a display unit configured to display an image of the object, wherein
in a case where the assessment unit assesses that an undesirable part is included in an undesirable part region within the image of the object, the display unit is configured to display the difference image for the undesirable part region, and either the first transmission image or the second transmission image for regions other than the undesirable part region.
